# EUROPEAN PATENT APPLICATION

(11) **EP 2 287 990 A1**
(43) Date of publication of application: **23.02.2011**
(21) Application number: 09460036.8
(22) Date of filing: 18.08.2009
(51) Int. Cl.: H02H 9/04, H02H 9/00, H01B 17/00

(54) **A device protecting against high frequency overvoltage**

(71) Applicant: ABB Research Ltd., 8050 Zürich (CH)
(72) Inventor: Ostrogorska, Magdalena, 31-324 Krakow (PL); Florkowski, Marek, 31-216 Krakow (PL); Fulczyk, Marek, 47-220 Kedzierzyn-Kozle (PL); Piasecki, Wojciech, 30-611 Krakow (PL)
(74) Representative: Chochorowska-Winiarska, Krystyna

(57) **Abstract**

The subject of the invention is a device protecting against high frequency overvoltage, comprising a solenoid conductive connector (1), designed for suppressing high frequency current and voltage components, applicable in the protection of electric equipment working in electric power networks, and especially in electric substations. The device protecting against high frequency overvoltage comprises a conductive connector (1) designed to be connected in series into the current path of an electric power system as a section of the current path. The conductive connector (1) contains an induction coil (2) connected in parallel with a resistor (3), located in a common insulating housing (8). The inventive device is **characterized in that** the induction coil (2) through one of the external conductive terminals (6) or (7) is connected with a capacitive device (14) or (14') of the electric power system, which causes that the conductive connector (1) functions as a low pass filter, whereas the other external conductive terminal (6) or (7) respectively, is connected with an auxiliary device (16), connected into the current path circuit.

## Description

The subject of the invention is a device protecting against high frequency overvoltage, comprising and electromagnetic conductive connector, intended for suppressing high frequency current and voltage components, applicable in protecting electric equipment working in electric power networks, and especially in electric substations.

Electric equipment working in electric power networks is exposed to multiple damage caused by adverse high frequency phenomena, which include overvoltages and steep rise in voltage on the equipment terminals. In order to protect against such adverse phenomena, protective devices are used. Their function is to reduce the value of overvoltage expressed by the overvoltage amplitude and/or to reduce the steepness of the rise in voltage on the terminals of electric equipment. Protective devices are usually connected between the phase terminals of protected equipment and ground, or between the terminals of individual phases.

A known way of reducing overvoltage value is the use of varistor-type overvoltage limiters, connected between each phase terminal and ground, or additionally between phase terminals. Their operation consist in reducing the value of overvoltage in relation to ground or phase-to-phase overvoltage, however, their protective operation does not protect equipment against the other adverse phenomenon, namely it does not reduce the steepness of the rise in voltage on the terminals of protected electric equipment.

Other known methods of protecting electric equipment against damaging high-frequency phenomena consist in using RC two-terminal networks (snubbers) or C elements, which are connected between the phase terminal of protected electric equipment and ground, in protective circuits. However, the effectiveness of the protective operation of the presented protectors depends to a large extent on the impedance parameters of the electric power line. Moreover, the use of large capacitance values is required, which results in large dimensions of protective equipment. To avoid it, a serial impedance element can be connected between the electric power line and the protected piece of equipment. Such serial device can be a reactor whose winding is a conductor going through the opening (centre) of a toroidal core. The serial impedance element must be so selected that its impedance for the network frequency, usually 50 Hz, is near zero.

European patent application No. EP460030.7 discloses a device for suppressing high frequency current and voltage components, which makes use of a series impedance element. The series impedance element is at least one reactor with a magnetic core whose magnetic circuit comprises at least two active parts on which the reactor windings connected with each other in series and anti-parallel are wound. The mentioned application description discloses also a solution which is a device consisting of at least two magnetic-core reactors interconnected in series and forming a stack in which the neighboring windings of the neighboring reactors are situated in such way that the magnetic fluxes produced by them are directed in opposite directions. Preferably, a resistor is connected in series to the input and output terminals of the reactor, and the reactor stack is placed in a common housing.

The above mentioned devices and methods of protecting electric equipment against damaging high-frequency phenomena are not applicable in practice to the protection of electric equipment working in high-voltage networks where equipment is considerably oversized in order to improve its resistance to the above mentioned phenomena. This results in larger dimensions and costs of equipment.

The Russian patent application RU2284622 discloses an overvoltage protection device, intended for the protection of electric networks and substations against high-frequency voltage surges. This device contains a coaxial two-element resistor whose internal resistive element is made of non-ferromagnetic material of high electric conductivity, while the external resistive element is made of ferromagnetic material of high resistivity exceeding 1 Ohm/m. An additional resistor functioning as a phase lead is connected in parallel to the internal resistive element. The external resistive element comprises a set of toroidal ferromagnetic cores fixed upon a current-conducting lead, between which insulating separators are inserted. The protective device of the described design permits an increase in the efficiency of electric equipment protection against surges without the need to increase the dimensions and weight of equipment used in electric substations. However, to obtain the optimum suppressing effect of the device as per the described solution, one has to select the parameters individually for the given substation. Due to the diversity of electric substations, the presented solution does not permit the construction of a universal protective device for use in a wide range of electric power networks and substations.

A device protecting against high frequency overvoltage as per the invention, containing a conductive connector for series connection in the current path of the electric power system as a section of the current path, which contains an induction coil connected in parallel with a resistor, located in a common insulating housing, is **characterized in that** the induction coil is connected with a capacitive device of the electric power system through one of the external conductive terminals, which causes that the conductive connector functions as a low pass filter, whereas the other external conductive terminal is connected with an auxiliary device connected into the current path circuit.

Preferably, the capacitive device of the electric power system is a high-voltage capacitor, and the auxiliary device is an overvoltage limiter or a support insulator.

Alternatively, the capacitive device of the electric power system is a capacitive voltage transformer, and the auxiliary device is an overvoltage limiter or a support insulator.

Alternatively, the capacitive device of the electric power system is an electric power transformer bushing, and the auxiliary device is an overvoltage limiter or a support insulator.

Preferably, the capacitive device and the auxiliary device are located on a common support structure.

The conductive connector as per the invention, applicable in the device as per any of the patent claims, is **characterized in that** the induction coil and the resistor are located in the same insulating housing, and the insulating housing has the shape of a section of a pipe, ending on both ends with ferrules with openings through which the external conductive terminals of the connector are taken out.

Preferably, the induction coil is a solenoid air-core coil.

The advantage of the inventive solution is increased usefulness of the device and the fact that it enables the construction of a very compact power system, which results in a decrease in the space occupied by the components of electric substations. The combination of a series element of a predetermined impedance frequency characteristic and typical components of substations, such as a capacitive transformer with a capacitance value typical for the given voltage and an overvoltage limiter, permits the construction of a protective device with a well defined characteristic of a low pass filter. This allows to standardize the device for specific types of substations and voltage levels.

The device as per the invention is shown as an embodiment in the drawing, where:
fig. 1 shows the conductive connector in half section,

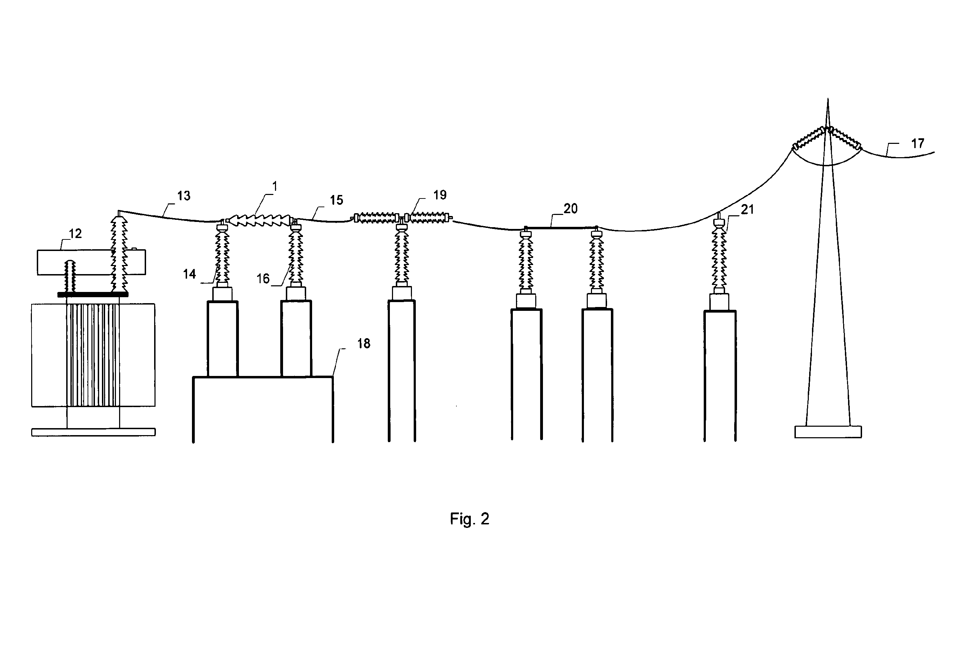

fig. 2 shows a diagram of a substation with the connector connected to the elements of the current path of the substation in the first embodiment of the invention,

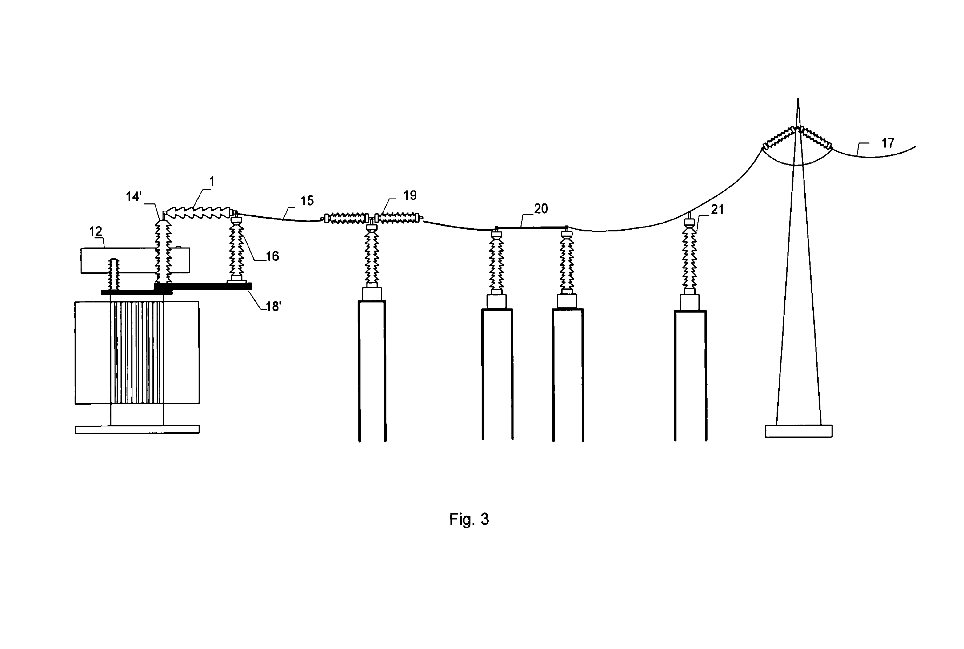

fig. 3 shows a diagram of a substation with the connector connected to the elements of the current path of the substation in the second embodiment of the invention,
fig. 4 shows the characteristics of the voltage present on the terminals of protected equipment if high-frequency surges occur and if they are suppressed.

The device protecting against high frequency overvoltage contains a conductive connector 1, which is a series element of the current path of the electric power system, which contains an induction element 2 connected in parallel with a resistor 3. The induction element 2 is preferably made in the form of a solenoid air-core coil which is wound on an insulating carcass 4. The resistor 3 is preferably a non-induction resistor located inside the air-core coil. The induction element 2 is connected through a conducting element 5 with electrically conducting external terminals 6 and 7 of the connector, by means of which the conductive connector 1 is connected to the terminals of the devices belonging to the current path of the electric power system in the form of an electric substation. The induction element 2 together with the resistor 3 are located inside a cylindrical insulating housing 8 which on both ends is closed with ferrules 9, 10 which have openings 11 for placing external terminals 6, 7 in them. One of the terminals 6 or 7 of the conductive connector 1 is connected in series with the protected piece of equipment 12 through the first section of a current path 13 and with a capacitive device 14 connected between the current path and ground. The capacitive device of the current path 14 is preferably a high-voltage capacitor or a capacitive voltage transformer or a bushing of a power transformer 14'. The second external terminal of the conductive connector 1 is connected with the second lead of the current path 15 and also with an auxiliary device 16, in the form of an overvoltage limiter or a support insulator, connected between the current path and ground. Thus the conductive connector 1, connected in series to the current path circuit of the electric substation energized from an overhead line 17, functions as a low pass filter for the protected piece of equipment 12 and makes a safeguard against high-frequency overvoltage without requiring an extension of the whole substation. The capacitive device 14 and the auxiliary device 16 are preferably located on a common support structure 18.

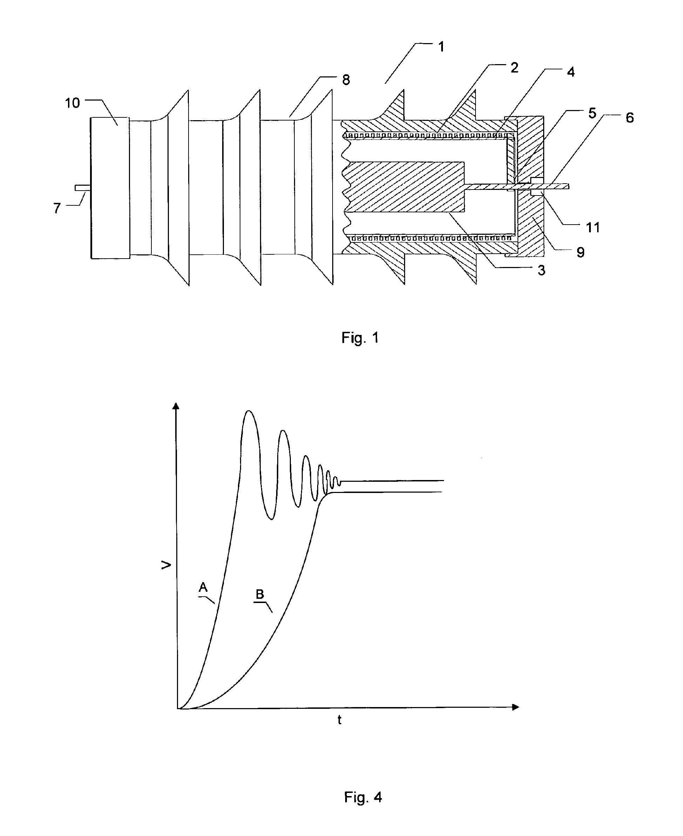

The conductive connector as per the invention is applicable to the protection of electric power equipment against the effects of high-frequency signals occurring in the network as a result of connection processes or lightning surges. By way of example, in the case of the reduction of quick-change processes resulting from a lightning surge, where the protected element is a transformer, the suppressing operation of the connector 1 is as follows. The occurrence of a lightning surge to the phase lead of the overhead line 17 results in the emergence of an overvoltage wave with a steeply rising front of, in practice often exceeding a few MV/µs. Such wave, propagating towards the protected piece of equipment 12 encounters the auxiliary device 16, in this case an overvoltage limiter, whose function is to reduce the overvoltage level to a specific protection level. Due to the large speed of operation of the overvoltage limiter and the occurrence of parasitic inductivities of connections between the pieces of equipment of the substation 19, 20 and 21, the voltage on the terminals of the protected piece of equipment 12 is characterized by initial steepness similar to the steepness of the surge sequence and by instantaneous overvoltage and oscillations, which is schematically shown in fig. 4 as the voltage sequence A. Such sequence poses a threat to the insulation system of the protected piece of equipment 12. If the conductive connector 1 is connected in series between the overvoltage limiter 16 and the protected object 12 shunted with the capacitive element 14 or 14', the connector 1 performs the function of a low pass filter. The connector 1 in combination with the capacitive device 14 or 14' absorbs energy carried by the front of the surge, which causes that steepness is lesser and reduces the higher harmonic of the voltage oscillations, which is schematically shown in fig. 4 as the voltage sequence B. As a consequence, the risk of damage to the insulation, to which the object 12 is exposed, is much lesser than with the traditional system of connections.

In a situation where the auxiliary device 16 is a support insulator, the overvoltage limiter is connected between the current path of the substation and ground at the section between the supply line 17 and the auxiliary device 16. The operation of the connector is therefore in such case the same as in the case, where the auxiliary device 16 is an overvoltage limiter.

A description of the conductive connector and of the device in which this connector is used for a single phase is shown in the embodiment of the invention. As most power systems are three-phase systems, the inventive conductive connector is applicable to each phase, which is not shown in the drawing.

## Claims

1. A device protecting against high frequency overvoltage comprising a conductive connector (1) to be connected in series into the current path of an electric power system as a section of the current path, containing an induction coil (2) connected in parallel with a resistor (3), located in a common insulating housing (8), **characterized in that** the induction coil (2) through one of the external conductive terminals (6) or (7) is connected with a capacitive device (14) or (14') of the electric power system, which causes that the conductive connector (1) functions as a low pass filter, whereas the other external conductive terminal (6) or (7) respectively, is connected with an auxiliary device (16), connected into the current path circuit.

2. A device as per claim 1, **characterized in that** the capacitive device (14) of the electric power system is a high-voltage capacitor, and the auxiliary device (16) is an overvoltage limiter or a support insulator.

3. A device as per claim 1, **characterized in that** the capacitive device (14) of the electric power system is a capacitive voltage transformer, and the auxiliary device (16) is an overvoltage limiter or a support insulator.

4. A device as per claim 1, **characterized in that** the capacitive device (14') of the electric power system is an electric power transformer bushing, and the auxiliary device (16) is an overvoltage limiter or a support insulator.

5. A device protecting against high frequency overvoltage for an electric power system as per claim 1, **characterized in that** the capacitive device (14) and the auxiliary device (16) are located on a common support structure (18).

6. A conducting connector applicable in the device as per claims 1- 5, **characterized in that** the induction coil (2) and the resistor (3) are located in the same insulating housing (8), and the insulating housing has the shape of a section of a pipe ending on both ends with ferrules (9), (10) with openings (11), through which the external conductive terminals (6 ) and (7 ) of the connector are taken out.

7. A connector as per claim 6, **characterized in that** the induction coil ( 2) is a solenoid air-core coil.
